**Europäisches Patentamt**

**European Patent Office**

**Office européen des brevets**

(19)

(11) Veröffentlichungsnummer : **0 431 202 B1**

# (12) EUROPÄISCHE PATENTSCHRIFT

(45) Veröffentlichungstag der Patentschrift :
**19.08.92 Patentblatt 92/34**

(51) Int. Cl.$^5$ : **B01J 19/02, B32B 5/32**

(21) Anmeldenummer : **89121874.5**

(22) Anmeldetag : **27.11.89**

(54) **Korrosionsfeste Auskleidung.**

(43) Veröffentlichungstag der Anmeldung :
**12.06.91 Patentblatt 91/24**

(45) Bekanntmachung des Hinweises auf die
Patenterteilung :
**19.08.92 Patentblatt 92/34**

(84) Benannte Vertragsstaaten :
**AT BE CH DE ES FR GB IT LI NL SE**

(56) Entgegenhaltungen :
**EP-A- 0 282 952**
**FR-A- 1 397 976**

(73) Patentinhaber : **SIGRI GREAT LAKES
CARBON GmbH
Rheingaustrasse 182
W-6200 Wiesbaden 1 (DE)**

(72) Erfinder : **Künzel, Jürgen, Dipl.-Ing. Dr.
Hochweg 37
W-8851 Thierhaupten (DE)**
Erfinder : **Swozil, Adolf, Dipl.-Ing. (FH)
Schlossbergweg 9
W-8851 Kühlenthal (DE)**
Erfinder : **Ullmann, Gerhard, Dipl.-Ing.
Jean-Bareth-Strasse 9
W-6080 Gross-Gerau (DE)**

EP 0 431 202 B1

Jouve, 18, rue Saint-Denis, 75001 PARIS

## Beschreibung

Die Erfindung betrifft eine korrosionsfeste Auskleidung von Apparaten, die aus wenigstens einer aus Kunststoff bestehenden oder Kunststoff enthaltenden Zwischenschicht und einer Deckschicht aus Kunststoff besteht.

In der Chemie, Umwelttechnik, Metallurgie und anderen Gebieten der Technik eingesetzte Apparate, wie z.B. Wärmeaustauscher, Verdampfer, Behälter, müssen zu einem Teil in Kontakt mit korrosiven Flüssigkeiten, Dämpfen und Gasen betrieben werden. Besonders wechselnde Zusammensetzungen, Konzentrationen, Temperaturen und Drücke der behandelten Substanzen können zu ernsten Korrosionsschäden an den Apparaten führen, wenn nicht besondere, im allgemeinen sehr aufwendige Werkstoffe verwendet werden. Auskleidungen und Beschichtungen der Apparate mit thermo- und duroplastischen Kunststoffen können metallische oder aus anderen Werkstoffen bestehende Apparate prinzipiell gegen Korrosion schützen, falls der verwendete Kunststoff unter den speziellen Betriebsbedingungen beständig ist. Bei der Wahl des Kunststoffs sind die unterschiedlichen mechanischen Parameter von Apparat und Auskleidung, wie E-Modul und thermischer Ausdehnungskoeffizient und auch die Haftung der Auskleidung am Mantel des Apparats, zu berücksichtigen.

Eine wesentliche Einflußgröße ist schließlich die Permeabilität der Auskleidung (Chem.-Ing.Techn. 58 (1986) Nr. 2, S 114 ff). Fast alle Kunststoffe sind nur beschränkt dicht, da durch verschiedene Diffusionsprozesse Fluide Kunststoffschichten durchdringen. Diese Permeation führt bei ausgekleideten Apparaten zu Haftungsschäden. Es bilden sich Hohlstellen, Blasen oder Pusteln, die schließlich aufbrechen können, so daß der Apparat an diesen Stellen dem Angriff korrosiver Medien ausgesetzt ist.

Zur Verhinderung derartiger Schäden wird in der Europäischen Patentanmeldung Nr. 0 282 952 A1 ein mehrschichtiger Aufbau der Apparateauskleidung vorgeschlagen, bei dem wenigstens eine der zwischen einer möglichst impermeablen Deckschicht aus Fluorkunststoff und der metallischen Apparateoberfläche liegenden Schichten zusätzlich Aktivkohle enthält. Die hohe Adsorptionsfähigkeit der Aktivkohle bedingt bis zu einem gewissen Grad ein Zurückhalten der Schadstoffe und durch die große Oberfläche der Aktivkohle und die Partialdruckänderung des diffundierenden Mediums soll einerseits der Diffusionsweg verlängert und andererseits die Diffusionsgeschwindigkeit in den porösen Hohlräumen verlangsamt werden. Nachteilig an dieser Lösung ist, daß sich die korrodierenden Substanzen in der Zwischenschicht ansammeln und ein gewisser Schadmaterialtransport durch Diffusion nicht zu verhindern ist, in dessen Folge schließlich doch Schädigungen der Metallwand hervorgerufen werden können.

Werden Kunststoffolien zur Auskleidung der Apparate verwendet, ist eine durchgehende Befestigung der Folie am Mantel des Apparats, z.B. durch Kleben oder Verschweißen, nicht erforderlich. Es genügt, die Folie im Abstand, z.B. zwischen Flanschen, einzuspannen. Im wesentlichen hängt die Folie locker im Apparat und in dem Raum zwischen Folie und Apparat eindringendes Permeat kann ständig z.B. über Bohrungen durch Diffusion oder Zwangsströmung aus dem Apparat herausgeführt werden. Die Konzentration korrosiver Stoffe ist dabei erfahrungsgemäß so klein, daß der Apparat nicht angegriffen wird. Durch Spülen mit Inertgasen oder Inhibitoren enthaltende Gase kann, falls nötig, der Effekt noch verstärkt werden.

Ein gewichtiger Nachteil dieser Lösung ist ihre ungenügende mechanische Stabilität. Beschädigungen der freien Folie sind verhältnismäßig häufig und ein Betrieb des Apparats im Unterdruckbereich ist nur möglich, wenn die Folie durch aufwendige Stützkonstruktionen gehalten werden kann.

Der Erfindung liegt daher die Aufgabe zugrunde, eine Auskleidung für einen Apparat mit einer besseren mechanischen Stabilität zu schaffen, zu deren Herstellung alle bekanntgewordenen Auskleidungsverfahren geeignet sind und die eine Abführung des Permeats ermöglicht.

Die Aufgabe wird mit einer Auskleidung der eingangs genannten Art dadurch gelöst, daß zwischen einer Deckschicht mit einer geringen Permeabilität und der Wand des Apparats eine Schicht mit einer größeren Permeabilität angeordnet ist und die Zwischenschicht nach außen entlüftet ist. Unter dem Terminus "geringe Permeabilität" wird die Permeabilität handelsüblicher Folien und Beschichtungen verstanden, deren Größe der einschlägigen Literatur entnommen werden kann (l.c. S. 116). Die Permeabilität der Zwischenschicht ist größer als die Permeabilität der Deckschicht, so daß die Diffusionsgeschwindigkeit in der Zwischenschicht, bezogen auf die Deckschicht wesentlich größer ist. Die unterschiedlichen Diffusionsgeschwindigkeiten ermöglichen bei ständiger Ableitung des Permeats durch Öffnungen in der Wand des Apparats die Einhaltung einer geringen Permeatkonzentration im Kontakt mit dem Apparat. Durch das Eindrücken inerter Fluide in die permeable Zwischenschicht oder Aufgeben eines Unterdrucks kann das Permeat beliebig verdünnt und Korrosionsschäden können vollständig ausgeschlossen werden.

Die Auskleidung besteht in der Regel aus den beiden Schichten mit verschiedener Permeabilität. Unter besonderen Bedingungen kann es von Vorteil sein, mehrere Deckschichten unterschiedlicher Zusammensetzung zu verwenden, etwa um eine größere Abriebfestigkeit oder einen bestimmten Benetzungsgrad zu erreichen, oder auch mehrere permeable Schichten zu verwenden. Der mehrschichtige Aufbau ermöglicht Permeabilitätsstufen und die Trennung des Permeats, z.B. nach Molgrößen. Jede Schicht der Auskleidung ist mit den benachbarten Schichten verbunden und die innere Schicht mit dem Mantel des Apparats. Die Verbindung erfolgt zweckmäßig durch Kleben, Schweißen oder Spritzverfahren. Klebstoffe und Schweißverfahren sind im wesentlichen von der stofflichen Zusammensetzung der Schichten abhängig und sind dem Fachmann bekannt (l.c.) Eine Beschreibung kann daher entfallen.

Die Permeabilität der Zwischenschicht erhält man vorzugsweise durch ein offenes Porensystem. Porosität und Größe der Poren bestimmen den Permeabilitätskoeffizienten. Für die üblichen Betriebsbedingungen der Apparate ist eine Porosität der Zwischenschicht von 10 bis 40 % und ein mittlerer Porendurchmesser von 10 bis 100 Mikrometer vorteilhaft. Die Dicke der porösen Zwischenschicht sollte zweckmäßig 0,5 bis 2,0 mm betragen. Zur Erzeugung der Zwischenschicht wird Kunststoffpulver, gegebenenfalls versetzt mit temporärem, beim Erhitzen verdampfendem Binder, oder Porenbildnern, auf den Mantel des Apparats gesprüht, wobei die technisch üblichen Verfahren, wie Flammspritzen oder das Aufspritzen von pastösen Massen, geeignet sind. Die Bedingungen - Korngröße, Temperatur, Konzentration - werden derart gewählt, daß die Schicht nicht dichtsintert, sondern die gewünschte Porosität erreicht wird. Mit Hilfe einfacher Vorversuche kann der Fachmann mit den ihm geläufigen Mitteln die Verfahrensparameter einstellen.

Nach einer anderen bevorzugten Ausführung der Erfindung bilden Zwischenschicht und Deckschicht eine integrale stoffliche Einheit. In bekannter Weise stellt man eine derartige Auskleidung durch Ausschäumen eines Spalts zwischen der Mantelfläche des Apparats und einer eingelegten Form her. Eine Beschichtung dieses Typs kann auch durch Spritzverfahren erhalten werden, wenn zum Spritzen der Zwischenschicht die Erwärmung des Spritzgutes so gesteuert wird, daß das Spritzgut sowohl auf der Behälterwand haftet als auch die gewünschte Porosität erhält und zum Spritzen der Deckschicht das Spritzgut so hoch erwärmt wird, daß sich eine auf der porösen Zwischenschicht gut haftende, porenfreie, dichte Deckschicht bildet. Die permeable Zwischenschicht kann auch vorteilhaft dadurch erzeugt werden, daß auf die Mantelfläche des Apparats eine im wesentlichen aus Fasern bestehende Schicht geklebt wird. Geeignet sind besonders Gelege oder Vliese, deren Porosität einfach und reproduzierbar eingestellt werden kann. Derartige faserporöse Schichten versteifen zudem die Deckschicht, was besonders für Folien mit geringer Festigkeit von Vorteil ist.

Als Ausgangsmaterial für die Herstellung der Zwischenschicht können auch körnige oder pulverförmige Teilchen aus korrosionsbeständigen Werkstoffen, die mit einem Überzug aus schmelz- oder sinterfähigen oder miteinander verklebbaren Kunststoffen versehen sind, verwendet werden. Hierzu sind z.B. Metallpulver aber vor allem Pulver aus keramischem Material, wie z.B. Siliciumcarbid, Porzellan oder Graphit geeignet. Der harte Kern dieses Pulvers bildet beim Aufbringen eine nicht deformierbare Stütze und erleichtert dadurch die Herstellung und Erhaltung einer definierten, offenen Porosität, während die gegenseitige Haftung der Teilchen durch die Kunststoffhüllen bewirkt wird. Als Hüllenmaterial werden Fluorpolymere bevorzugt.

Die Permeabilität der Zwischenschicht wird bei einer anderen Ausführungsform durch Kanäle oder Bohrungen erzielt, die in die Zwischenschicht eingelassen sind. Bohrungen erhält man beispielsweise durch Nadeln der auf die Mantelfläche des Apparats aufgebrachten Zwischenschicht. Kanäle sind vorteilhaft angeformt, z.B. durch Eindrücken in die Schicht. Bei diesen Ausführungsformen ist dafür Sorge zu tragen, daß Bohrungen und Kanäle untereinander und mit den Öffnungen in der Apparatewand in Verbindung stehen, durch die das Spülfluid zu- oder abgeleitet wird.

Für die Auskleidungsschichten eignen sich grundsätzlich alle als Korrosionsschutz verwendeten Thermo- und Duroplasten. Die für bekannte Auskleidungen bestehenden Begrenzungen wegen größerer Differenzen im E-Modul oder im thermischen Ausdehnungskoeffizienten entfallen im wesentlichen, da die permeable Zwischenschicht die Kräfte aufnimmt. Für die Auswahl des Kunststoffes ist daher allein die Korrosionsbeständigkeit maßgebend. Korrosionsbeständig in einem weiten Bereich sind Fluorpolymere, wie Polytetrafluorethylen (PTFE) oder Tetrafluorethylen-Perfluorvinylether (TFA), die daher für Deck- und Zwischenschicht bevorzugt werden, für die Deckschicht zweckmäßig als Folie. Auch Duroplasten, wie Phenolformaldehyd-Harze, gegebenenfalls faserverstärkt oder gefüllt, eignen sich als Auskleidung für viele Anwendungen. Wegen der einfachen Verarbeitung und ausreichender Korrosionsbeständigkeit kann die Zwischenschicht aus einem Duroplasten und die Deckschicht aus einer PTFE oder TFA-Folie bestehen.

Die Erfindung wird anhand der folgenden zwei Beispiele, durch die eine Beschichtung nach dem Stand der Technik mit einer erfindungsgemäßen Beschichtung verglichen wird, erläutert.

Beispiel 1

Beschichtung nach dem Stand der Technik:

Eine 2 mm starke Platte aus handelsüblichem Apparatebaustahl wurde von einem Hersteller korrosionsfester Apparateauskleidungen mit einer 1 mm dicken PFA-Schicht (Poly(tetrafluorethylen-perfuoralkoxyethylen)-Copolymerisat) beschichtet und dann auf der beschichteten Seite in einer Testapparatur 1500 Std lang bei Normaldruck mit siedender konzentrierter Salzsäure beaufschlagt. Nach dem Ausbau aus der Apparatur betrug die Haftfestigkeit der Beschichtung auf der Stahlunterlage beim Abschälen nur mehr ein Drittel des Wertes vor der Beaufschlagung und es wurde eine starke Abtragskorrosion an der Stahloberfläche festgestellt.

Beispiel 2

Auf eine entsprechende Stahlplatte gleicher Abmessungen wurde mit PFA beschichtetes Siliciumcarbidpulver, Korngröße 0,25 bis 0,35 mm, PFA-Schichtdicke 20 μm zu einer im Mittel 0,5 mm starken, porösen Zwischenschicht aufgesintert. Sodann wurde auf dieser Schicht durch Sintern eines PFA-Pulvers mit einer Korngröße von 0,5 bis 0,7 mm bei erhöhter Temperatur eine 1 mm starke, dichte Deckschicht erzeugt. Zur Abführung der korrosiven Gase hatte die Stahlplatte durchgehende, bis an die poröse Schicht reichende Bohrungen, 3 mm Durchmesser, deren Abstand voneinander 3,5 cm betrug. Die so beschichtete Platte wurde unter den gleichen Bedingungen, wie sie für Beispiel 1 beschrieben sind, mit konzentrierter, siedender Salzsäure beaufschlagt. Die Entlüftung der porösen Zwischenschicht geschah unter Normaldruck ohne zusätzliche Hilfsmittel. Die Prüfung nach dem Ausbau aus der Testapparatur, die in gleicher Weise wie bei der Probe des ersten Beispiels durchgeführt wurde, ergab keine meßbare Verringerung der Haftfestigkeit. Es wurden auch keine Korrosionsspuren an der Grenzschicht Metall/Zwischenschicht festgestellt.

**Patentansprüche**

1. Korrosionsfeste Auskleidung von Apparaten, die aus wenigstens einer aus Kunststoff bestehenden oder Kunststoff enthaltenden Zwischenschicht und einer Deckschicht aus Kunststoff besteht, und in der jede Schicht der Auskleidung mit der/den benachbarten Schicht(en) und die innere Schicht mit dem Mantel des Apparats verbunden ist,
dadurch gekennzeichnet,
daß die Deckschicht eine geringe Permeabilität und die zwischen der Wand des Apparates und der Deckschicht befindliche Schicht eine größere Permeabilität hat und die Zwischenschicht nach außen entlüftet ist.

2. Auskleidung nach Patentanspruch 1,
dadurch gekennzeichnet,
daß die Zwischenschicht ein offenes Porensystem enthält.

3. Auskleidung nach den Patentansprüchen 1 und 2,
dadurch gekennzeichnet,
daß die Porosität der Zwischenschicht 10 bis 40 % beträgt.

4. Auskleidung nach den Patentansprüchen 1 bis 3,
dadurch gekennzeichnet,
daß der mittlere Porendurchmesser der Zwischenschicht 10 bis 100 Mikrometer beträgt.

5. Auskleidung nach den Patentansprüchen 1 bis 4,
dadurch gekennzeichnet,
daß Zwischenschicht und Deckschicht eine stoffliche Einheit bilden.

6. Auskleidung nach den Patentansprüchen 1 bis 5,
dadurch gekennzeichnet,
daß die Zwischenschicht Fasern enthält.

7. Auskleidung nach den Patentansprüchen 1 bis 6,
dadurch gekennzeichnet,
daß die Zwischenschicht aus einem körnigen, korrosionsbeständigen Material, das mit Kunststoffen beschichtet ist, besteht.

8. Auskleidung nach den Patentansprüchen 1 bis 7,
dadurch gekennzeichnet,
daß die Zwischenschicht Kanäle enthält

9. Auskleidung nach Patentanspruch 8,
dadurch gekennzeichnet,
daß die Kanäle angeformt sind.

10. Auskleidung nach den Patentansprüchen 1 bis 9,
dadurch gekennzeichnet,
daß die Deckschicht aus Fluorpolymeren besteht.

11. Auskleidung nach den Patentansprüchen 1 bis 9,

dadurch gekennzeichnet,

daß die Deckschicht aus einem Duroplasten besteht.

12. Auskleidung nach den Patentansprüchen 1 bis 9,

dadurch gekennzeichnet,

daß die Zwischenschicht aus einem Duroplasten und die Deckschicht aus einer Folie aus einem Fluorpolymeren bestehen.

13. Auskleidung nach den Patentansprüchen 1 bis 9,

dadurch gekennzeichnet, daß

die Zwischenschicht fest mit der Behälterwand verbunden ist und aus miteinander verbundenen körnigen Teilchen besteht und die dichte Deckschicht aus dem gleichen Material wie die Zwischenschicht besteht und mit der Oberfläche der Zwischenschicht fest verbunden ist.


## Claims

1. Corrosion resistant lining of apparatus which consists of at least one intermediate layer consisting of synthetic plastics or containing synthetic plastics and is connected in each layer of the lining with the neighbouring layer(s) and the inner layer with the casing of the apparatus,

characterised in that

the cover layer has a low permeability and the layer located between the walls of the apparatus and the cover layer has a greater permeability, and the intermediate layer is de-aerated to the exterior.

2. Lining according to claim 1,

characterised in that

the intermediate layer contains an open pore system.

3. Lining according to claims 1 and 2,

characterised in that

the porosity of the intermediate layer amounts to 10 to 40%.

4. Lining according to claims 1 to 3,

characterised in that

the mean pore diameter of the intermediate layer amounts to 10 to 100μm.

5. Lining according to claims 1 to 4,

characterised in that

intermediate layer and covering layer form a material unit.

6. Lining according to claims 1 to 5,

characterised in that

the intermediate layer contains fibres.

7. Lining according to claims 1 to 6

characterised in that

the intermediate layer consists of a particulate corrosion resistant material which is coated with synthetic plastics.

8. Lining according to claims 1 to 7,

characterised in that

the intermediate layer contains channels.

9. Lining according to claims 1 to 8,

characterised in that

the channels are formed therein.

10. Lining according to claims 1 to 9,

characterised in that

the covering layer consists of fluoropolymers.

11. Lining according to claims 1 to 9,

characterised in that

the covering layer consists of a thermosetting plastics.

12. Lining according to claims 1 to 9,

characterised in that

the intermediate layer consists of a thermosetting plastics and a covering layer consists of a fluoropolymer foil.

13. Lining according to claims 1 to 9,

characterised in that

the intermediate layer is connected firmly with the container wall and consists of granular particles connected with one another and the dense covering layer consists of the same material as the intermediate layer and is connected firmly with the surface of the intermediate layer.

**Revendications**

1. Revêtement d'appareils résistant à la corrosion, qui comprend au moins une couche intermédiaire contenant de la matière synthétique, ou qui est en matière synthétique, et dans lequel chaque couche de revêtement est liée à la ou les couches voisine(s) et la couche interne est liée à l'enveloppe de l'appareil, caractérisé en ce que la couche de revêtement présente une faible perméabilité et la couche se trouvant entre la paroi de l'appareil et la couche de revêtement a une perméabilité plus importante et la couche intermédiaire est dégazée vers l'extérieur.

2. Revêtement selon la revendication 1, caractérisé en ce que la couche intermédiaire comprend un système de pores ouverts.

3. Revêtement selon les revendications 1 et 2, caractérisé en ce que la porosité de la couche intermédiaire est comprise entre 10 et 40 %.

4. Revêtement selon les revendications 1 à 3, caractérisé en ce que la taille moyenne de pore de la couche intermédiaire est comprise entre 10 et 100 micromètres.

5. Revêtement selon les revendications 1 à 4, caractérisé en ce que la couche intermédiaire et la couche de revêtement sont identiques au point de vue materiau.

6. Revêtement selon les revendications 1 à 5, caractérisé en ce que la couche intermédiaire contient des fibres.

7. Revêtement selon les revendications 1 à 6, caractérisé en ce que la couche intermédiaire est en matériau granuleux résistant à la corrosion qui est enrobé de matières plastiques.

8. Revêtement selon les revendications 1 à 7, caractérisé en ce que la couche intermédiaire contient des canaux.

9. Revêtement selon la revendication 8, caractérisé en ce que les canaux sont moulés.

10. Revêtement selon les revendications 1 à 9, caractérisé en ce que la couche de revêtement est en fluoropolymères.

11. Revêtement selon les revendications 1 à 9, caractérisé en ce que la couche de revêtement est en matière thermodurcissable.

12. Revêtement selon les revendications 1 à 9, caractérisé en ce que la couche intermédiaire est en matériau thermodurcissable et que la couche de revêtement est une feuille de polymère fluoré.

13. Revêtement selon les revendications 1 à 9, caractérisé en ce que la couche intermédiaire est liée solidement à la paroi de la cuve et consiste en particules granuleuses liées entre elles, et la couche de revêtement étanche est en même matériau que la couche intermédiaire et est liée solidement à la surface de la couche intermédiaire.